(19) Europäisches Patentamt
European Patent Office
Office européen des brevets

(11) **EP 1 923 414 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(51) Int Cl.:
*C08G 18/42* (2006.01)     *C08G 18/44* (2006.01)
*C08G 18/40* (2006.01)     *C09D 175/06* (2006.01)
*C08G 18/79* (2006.01)     *C09D 175/04* (2006.01)

(21) Anmeldenummer: **07021438.2**

(22) Anmeldetag: **03.11.2007**

(54) **Beschichtungsmittel**

Coating agent

Agent de revêtement

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **15.11.2006 DE 102006053741**

(43) Veröffentlichungstag der Anmeldung:
**21.05.2008 Patentblatt 2008/21**

(73) Patentinhaber: **Bayer Intellectual Property GmbH 40789 Monheim (DE)**

(72) Erfinder:
• **Wamprecht, Christian, Dr.**
**41472 Neuss (DE)**
• **Mechtel, Markus, Dr.**
**51467 Bergisch Gladbach (DE)**
• **Klimmasch, Thomas**
**51379 Leverkusen (DE)**

(74) Vertreter: **BIP Patents
c/o Bayer Intellectual Property GmbH
Creative Campus Monheim
Alfred-Nobel-Straße 10
40789 Monheim (DE)**

(56) Entgegenhaltungen:
**EP-A1- 1 550 695     EP-A1- 1 731 582
EP-A1- 1 873 177     EP-A2- 1 479 704**

**Beschreibung**

Die vorliegende Erfindung betrifft Kombinationen aus Oligocarbonatpolyolen und Oligopolyesterpolyolen und ihre Verwendung in Beschichtungsmitteln für kratzfeste Decklacke.

Kratzfeste Decklacke, vor allem für den Automobildecklackbereich sowie für die Autoreparaturlackierung, sind bereits seit vielen Jahren von großem Interesse. Neben der Eigenschaft, dass derartige Decklacke eine geringe Verkratzungsneigung, zum Beispiel in einer Automobilwaschstraße, aufweisen sollen, gelten ferner die Forderungen, dass auch eine ausgeprägte Lösemittel-und Säurebeständigkeit dieser Lacksysteme gegeben sein muss.

So haben sich vor allem in den letzten Jahren 2-komponentige Polyurethansysteme auf dem Markt durchgesetzt, welche sich vor allem durch gute Beständigkeiten gegen Lösemittel und Chemikalien bei gleichzeitig guter Kratzbeständigkeit und ausgezeichneter Witterungsbeständigkeit auszeichnen.

Oftmals werden Polyacrylate ggf. in Abmischung mit Polyestern als Polyolbindemittel in solchen Systemen eingesetzt. Als Vernetzer dienen hauptsächlich aliphatische und/oder cycloaliphatische Polyisocyanate auf Basis von Hexamethylendiisocyanat und Isophorondiisocyanat.

Diese 2K Polyurethanbeschichtungsmittel haben ein sehr gutes Gesamteigenschaftsniveau erreicht, allerdings beobachtet man vor allem bei dunklen Farbtönen häufig eine Verkratzung des Klarlacks nach häufigen Waschgängen in Waschstraßen. Je nach Elastizitätseinstellung der Lackschicht bilden sich die Kratzer mit der Zeit zurück, man spricht vom sogenannten Reflow. Erhöht man jedoch zur Verbesserung des Reflow-Verhaltens die Elastizität der Klarlackschicht, so verliert der Lack an Oberflächenhärte und es verschlechtert sich vor allem die Lösemittel- und Chemikalienbeständigkeit, insbesondere die Säurebeständigkeit [Carl Hanser Verlag, München, MO Metalloberfläche 54 (2000) 60-64]. So gibt es im Stand der Technik Bemühungen, die Kratzfestigkeit von 2K PUR-Lacken durch Erhöhung der Elastizität der Polyolkomponente zu verbessern, hauptsächlich durch Kombinationen aus Polyacrylaten und elastischeren Polyestern.

Die DE-A 198 24 118 beschreibt lösemittelarme Bindemittel auf Polyester-Polyacrylatbasis, die mit Di- und/oder Polyisocyanaten zu schnell trocknenden Beschichtungen mit guter Haftung ausgehärtet werden können. Aufgrund des hohen Polyesteranteils weisen diese jedoch nur eine unzureichende Säurebeständigkeit auf und sind für den Einsatz in Automobildecklacken ungeeignet.

Die WO 96/20968 beschreibt ein Beschichtungsmittel für Automobile und Lastkraftwagen, das ein Polyacrylat auf Basis von alkylsubstituierten cycloaliphatischen (Meth)acrylatmonomeren oder alkylsubstituierten aromatischen Vinylmonomeren, einen multihydroxyfunktionellen Oligoester und ein Polyisocyanat enthält. Da die Oligoester allerdings herstellbedingt neben primären auch eine größere Anzahl an sekundären Hydroxylgruppen aufweisen und für niedrigviskose Beschichtungsmittel (< 3000 mPa·s / 23°C) sehr hohe Mengen dieser Ester (> 60 Gew.% bezogen auf die Gesamtformulierung) eingesetzt werden müssen, härten diese nur sehr langsam und bei höheren Temperaturen aus, so dass sie für temperaturempfindliche Substrate, wie zum Beispiel Kunststoffanbauteile, ungeeignet sind.

EP-A 0 896 991 beschreibt Beschichtungsmittel auf Basis von Polyacrylat-Polyester-Mischungen mit Polyesteranteilen < 10 Gew.% und Hydroxylzahlen von 40 - 125 mg KOH/g. Aufgrund der resultierenden niedrigen Vernetzungsdichte weisen daraus hergestellte PUR-Lacke keine ausreichenden Lösemittel- und Chemikalien auf. Darüber hinaus ist die Viskosität mit 3.000 - 5.000 mPas (23°C) bei einem Festkörpergehalt von 70 Gew.% für die Formulierung festkörperreicher PUR-Lacke zu hoch.

Im Stand der Technik, wie z. B. in der EP-A 1 101 780, der EP-A 0 819 710 und der EP-A 0 778 298, wird oftmals pauschal der Einsatz von Mischungen von Polyacrylaten mit anderen Polyolen, wie z. B. Polyestern und/oder Polycarbonaten als Polyolbindemittel und Reaktionspartner für Polyisocyanatvernetzer in 2K PUR-Lacken erwähnt, ohne jedoch auf die speziellen Vorteile gerade dieser Mischungen einzugehen. Ferner werden keine Angaben über die mengenmäßige Zusammensetzung sowie das Molekulargewicht und die OH-Funktionalität des Polycarbonatpolyols solcher Mischsysteme gemacht.

In der anonymen Veröffentlichung 493099 des Research Disclosure vom Mai 2005 werden auf Seite 584 Polycarbonatdiole und ihre Kombinationsmöglichkeiten mit anderen Polyolen sowie entsprechende Polyurethanbeschichtungen beschrieben. Die erzielbaren Eigenschaften solcher Lacke, wie z. B. gute Haftung, hoher Glanz, Härteentwicklung, Verlauf, Alkalibeständigkeit, Flexibilität, Elastizität, Schlagfestigkeit und Abriebbeständigkeit, werden allgemein, ohne entsprechende Prüfergebnisse oder Nachweise genannt. Irgendwelche Angaben über eine Verbesserung der Kratzfestigkeit von Lacken sind nicht zu finden.

Die EP-A 1 731 582 offenbart Beschichtungsmittel, enthaltend A) eine Polyolkomponente, die aus a) 1 bis 50 Gew.% an aliphatischen Oligocarbonatpolyolen mit einem zahlenmittleren Molekulargewicht Mn von 200 bis 5 000 g/mol und b) 50 bis 99 Gew.% an hydroxyfunktionellen Polyacrylatpolyolen besteht und B) ein oder mehrere gegenüber OH-Gruppen reaktive (Poly) Isocyanatvernetzer mit einer mittleren NCO-Funktionalität von 2,0. Das Dokument offenbart auch Polyolgemische aus Oligoesterpolyolen und Oligocarbonatpolyolen.

Die EP-A 1 873 177 offenbart Polyolgemische aus Polyesterpolyolen und Polycarbonatpolyolen mit einem Molekulargewicht von 1000-5000 g/mol.

Die EP-A 1 550 695 offenbart Polyolgemische enthaltend Polyesterpolyole und Polycarbonatpolyole mit einem Molekulargewicht von 1000-4000g/ mol.

Aufgabe der vorliegenden Erfindung war es daher, neue Beschichtungsmittel zur Verfügung zu stellen, die eine Verbesserung der Kratzfestigkeit aufweisen, ohne dabei die Säure- und Lösemittelbeständigkeit der Decklacksysteme negativ zu beeinflussen.

Es wurde überraschenderweise gefunden, dass durch die Verwendung von speziellen Kombinationen aus Oligocarbonatpoylolen und Oligoesterpolyolen in Formulierungen für Beschichtungsmittel Decklacke hergestellt werden können, die eine deutlich verbesserte Kratzbeständigkeit aufweisen, bei gleich guter bzw. verbesserter Lösemittel- und Chemikalienbeständigkeit.

Gegenstand der Erfindung sind daher Polyolkombinationen, bestehend aus

A) 20 bis 50 Gew.% aliphatischen Oligocarbonatpolyolen mit einem zahlengemittelten Molekulargewicht Mn von 200 bis 2.000 g/mol basierend auf 1,4-Butandiol, 1-6-Hexandiol, 3-Methyl-1,5-Pentandiol, Cyclohexan-1,4-dimethanol, Trimethylolpropan, Glycerin. oder deren Mischungen

und

B) 80 bis 50 Gew.% Oligopolyesterpolyolen mit einem zahlengemittelten Molekulargewicht Mn von 200 bis 2.000 g/mol basierend auf ε-Caprolacton und 1,4-Butandiol, 1,6-Hexandiol, 3-Methyl-1,5-Pentandiol, Cyclohexan-1,4-dimethanol, Trimethylolpropan, Glycerin, Pentaerythrit oder Mischungen dieser Alkohole

wobei sich die Mengen von A) und B) zu 100 Gew.% addieren

Bevorzugt werden in A) aliphatische Oligocarbonatpolyole eingesetzt, die ein zahlenmittleres Molekulargewicht von 300 bis 1.500 g/mol aufweisen.

Bevorzugt werden in A) aliphatische Oligocarbonatpolyole der vorstehend genannten Art eingesetzt, die eine OH-Funktionalität von 1,5 bis 5, besonders bevorzugt 1,7 bis 4, ganz besonders bevorzugt 1,9 bis 3 haben.

Die Herstellung der in A) eingesetzten aliphatischen Oligocarbonatpolyole kann durch Umesterung von monomeren Dialkylcarbonaten wie Dimethylcarbonat, Diethylcarbonat etc. mit Polyolen mit einer OH-Funktionalität ≥ 2,0 wie 1,4-Butandiol, 1,3-Butandiol, 1,5 Pentandiol, 1,6-Hexandiol, 3-Methyl-1,5-pentandiol, 1,12-Dodecandiol, Cyclohexan-1,4-dimethanol, 3(4),8(9)-Bis-(hydroxymethyl)-tricyclodecan, Trimethylolpropan, Glycerin etc. erfolgen und ist beispielhaft in EP 1 404 740 B1 Bsp. 1 bis 5, EP 1 477 508 A1, Bsp. 3 beschrieben.

Für die erfindungsgemäßen Bindemittelkombinationen werden bevorzugt aliphatische Oligocarbonatpolyole und besonders bevorzugt aliphatische Oligocarbonatpolyole mit einem Molekulargewicht von 200 bis 2.000 g/mol basierend auf 1,4-Butandiol, 1-6-Hexandiol, 3-Methyl-1,5-pentandiol, Cyclohexan-1,4-dimethanol, Trimethylolpropan, Glycerin oder deren Mischungen eingesetzt. Bevorzugt beträgt das Molekulargewicht der Oligocarbonatpolyole 300 bis 1.500 g/mol

Bevorzugt werden in B) aliphatische Oligoesterpolyole eingesetzt, die ein zahlenmittleres Molekulargewicht von 300 bis 1.500 g/mol aufweisen.

Bevorzugt werden in B) aliphatische Oligoesterpolyole der vorstehend genannten Art eingesetzt, die eine OH-Funktionalität von 1,5 bis 6, besonders bevorzugt 2 bis 4, ganz besonders bevorzugt 2 bis 3 haben.

Die Herstellung der in B) eingesetzten aliphatischen Oligoesterpolyole kann durch Umsetzung von cyclischen Lactonen, wie ε-Caprolacton oder γ-Butyrolacton, mit Polyolen mit einer OH-Funktionalität ≥ 2,0 wie 1,2-Ethandiol, 1,2-Propandiol, 1,3-Propandiol, Diethylenglykol, 1,4-Butandiol, 1,3-Butandiol, 1,5 Pentandiol, 1,6-Hexandiol, 3-Methyl-1,5-pentandiol, 1,12-Dodecandiol, Cyclohexan-1,4-dimethanol, 3(4),8(9)-Bis-(hydroxymethyl)-tricyclodecan, Trimethylolpropan, Glycerin, Pentaerythrit, Sorbit etc. erfolgen und ist beispielhaft in EP 1 404 740 B1 Bsp. 1 bis 5, EP 1 477 508 A1, Bsp. 3 beschrieben.

Für die erfindungsgemäßen Polyolkombinationen werden bevorzugt aliphatische Oligoesterpolyole und besonders bevorzugt aliphatische Oligoesterpolyole mit einem Molekulargewicht von 200 bis 2.000 g/mol basierend auf 1,4-Butandiol, 3-Methyl-1,5-pentandiol, 1,6-Hexandiol, Cyclohexan-1,4-dimethanol, Trimethylolpropan, Glycerin, Pentaerythrit oder deren Mischungen eingesetzt.

Die erfindungsgemäßen Polyolkombinationen, bestehend aus den Oligocarbonatpolyolen A) und den Oligopolyesterpolyolen B) können als solche bereits als Bindemittel und Reaktionspartner für Vernetzerharze zur Herstellung von Beschichtungsmitteln und Lacken, insbesondere kratzfesten Decklacken, eingesetzt werden. Vorzugsweise werden die erfindungsgemäßen Polyolmischungen jedoch in Kombination mit Polyacrylatpolyolen C) als weitere Polyolkomponente in entsprechenden Beschichtungsmitteln und Lacken eingesetzt.

Bei den Polyacrylatpolyolen C) handelt es sich insbesondere um Polymerisate von Alkyl-, Aryl- und/oder Cycloalkylester der Acryl- oder Methacrylsäure mit anderen olefinisch ungesättigten Monomeren oder Oligomeren, wie z.B. Styrol, α-Methylstyrol, Vinyltoluol, Olefine, wie z.B. 1-Octen und/oder 1-Decen, Vinylestern, wie z.B. ®VeoVa 9 und/ oder ®VeoVa 10 von Hexion, (Meth)acrylnitril, (Meth)acrylamid, Methacrylsäure, Acrylsäure, Polybutadiene und zu Vernetzungsreaktionen befähigte Gruppierungen aufweisende Monomere, wie z.B. Hydroxyalkylester der Acryl- oder Methacrylsäure, Glycidylester der Acryl- oder Methacrylsäure und/oder aminofunktionelle Ester der Acryl- oder Methacrylsäure.

Bei den gegenüber OH-Gruppen reaktiven Vernetzerharzen D) handelt es sich um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit U-retdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den Schriften DE-A 16 70 666, 19 54 093, 24 14 413, 24 52 532, 26 41 380, 37 00 209, 39 00 053 und 39 28 503 oder den EP-A 336 205, 339 396 und 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 g/mol mit aliphatisch, cycloaliphatisch, araliphatisch und/oder aromatisch gebundenen Isocyanatgruppen, wie 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3) isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen.

Ganz besonders bevorzugt sind Polyisocyanate bzw. Polyisocyanatgemische mit Isocyanuratstruktur auf Basis von HDI, IPDI und/oder 4,4'-Diisocyanatodicyclohexylmethan.

Ferner ist es ebenso möglich, so genannte blockierte Polyisocyanate und/oder Isocyanate, bevorzugt blockierte Polyisocyanate bzw. Polyisocyanatgemische, ganz besonders bevorzugt blockierte Polyisocyanate bzw. Polyisocyanatgemische mit Isocyanuratstruktur auf Basis von HDI, IPDI und/oder 4,4'-Diisocyanatodicyclohexylmethan einzusetzen.

Die Blockierung von (Poly)Isocyanaten zum zeitweisen Schutz der Isocyanatgruppen ist eine seit langem bekannte Arbeitsmethode und wird z.B. in Houben Weyl, Methoden der organischen Chemie XIV/2, S. 61-70 beschrieben.

Als Blockierungsmittel kommen alle Verbindungen in Betracht, die bei Erhitzen des blockierten (Poly)Isocyanats, ggf. unter Anwesenheit eines Katalysators, abgespalten werden können. Geeignete Blockierungsmittel sind z.B. sterisch anspruchsvolle Amine wie Dicyclohexylamin, Diisopropylamin, N-tert-Butyl-N-benzylamin, Caprolactam, Butanonoxim, Imidazole mit den verschiedenen denkbaren Substitutionsmustern, Pyrazole wie 3,5-Dimethylpyrazol, Triazole und Tetrazole, ebenso Alkohole wie Isopropanol, Ethanol, tert.-Butanol. Daneben besteht auch die Möglichkeit, die Isocyanatgruppe so zu blockieren, dass bei einer Weiterreaktion nicht das Blockierungsmittel abgespalten wird, sondern die intermediär gebildete Zwischenstufe abreagiert. Dies ist insbesondere beim Cyclopentanon-2-carboxyethylester der Fall, der bei der thermischen Vernetzungsreaktion vollständig in das polymere Netzwerk einreagiert und nicht wieder abgespalten wird.

Besonders bei der Verwendung blockierter Polyisocyanate können ebenfalls weitere, reaktive Verbindungen, welche gegenüber OH oder NH-Gruppen reaktive Gruppen aufweisen, als zusätzliche Vernetzerkomponenten neben Komponente D) eingesetzt werden. Beispielsweise sind dies Aminoplastharze.

Als Aminoplastharze sind die in der Lacktechnologie bekannten Kondensationsprodukte von Melamin und Formaldehyd, bzw. Harnstoff und Formaldehyd anzusehen. Geeignet sind alle herkömmlichen, nicht oder mit gesättigten Monoalkoholen mit 1 bis 4 C-Atomen veretherten MelaminFormaldehyd-Kondensate. Im Falle der Mitverwendung anderer Vernetzerkomponenten muss die Menge an Bindemittel mit NCO-reaktiven Hydroxylgruppen entsprechend angepasst werden.

Als Katalysatoren für die Reaktion der Komponenten A) bis C) mit der Komponente D) zur Herstellung der erfindungsgemäßen Beschichtungsmittel können Katalysatoren, wie handelsübliche Organometallverbindungen der Elemente Aluminium, Zinn, Zink, Titan, Mangan, Eisen, Bismut oder auch Zirkonium wie Dibutylzinnlaurat, Zinkoctoat, Titantetraisopropylat, verwendet werden. Darüber hinaus eignen sich aber auch tertiäre Amine, wie z.B. 1,4-Diazabicyclo-[2.2.2]-octan.

Ferner ist es möglich, die Umsetzung der Komponente D) mit den Komponenten A) bis C) zu beschleunigen, in dem die Aushärtung bei Temperaturen zwischen 20 und 200 °C bevorzugt zwischen 60 und 180 °C, besonders bevorzugt zwischen 70 und 150 °C durchgeführt wird.

Neben der erfindungswesentlichen Polyolmischung, bestehend aus A) und B) können auch weitere dem Fachmann aus der Polyurethanlacktechnologie bekannte, organische Polyhydroxylverbindungen oder aminischen Reaktivverdünner eingesetzt werden.

Bei diesen anderen Polyhydroxylverbindungen kann es sich um die üblichen Polyether-, Polyurethan- oder um weitere, bisher nicht beschriebene Polycarbonat-, Polyester-, und Polyacrylatpolyole handeln. Vorzugsweise werden als weitere organische Polyhydroxylverbindungen neben den erfindungsgemäßen Polyolkombinationen aus A) und B) die an sich bekannten, bereits genannten Polyacrylatpolyole C) des Standes der Technik eingesetzt. Bei den aminischen Reaktivverdünnern kann es sich um Produkte mit blockierten Aminogruppen, wie Aldimine oder Ketimine , oder um solche, die noch freie, jedoch in ihrer Reaktivität abgeschwächte Aminogruppen aufweisen, wie Asparaginsäureester, handeln. In aller Regel weisen diese Reaktivverdünner mehr als eine (blockierte) Aminogruppe auf, sodass sie bei der Vernetzungsreaktion zum Aufbau des polymeren Lackfilmnetzwerkes beitragen.

Falls neben der erfindungswesentlichen Polyolkomponente A) bis C) weitere Polyhydroxylverbindungen oder aminische Reaktivverdünner der vorstehend genannten Art eingesetzt werden, beträgt der Anteil dieser zusätzlichen gegenüber Isocyanaten reaktiven Verbindungen maximal 50 Gew.-%, vorzugsweise maximal 30 Gew.-% bezogen auf die Menge der erfindungswesentlichen Komponenten A) bis C). Besonders bevorzugt werden jedoch die erfindungswesentlichen Polyolkomponenten A) bis C) als alleinige Polyolkomponenten in den erfindungsgemäßen Beschichtungsmitteln eingesetzt.

Das Verhältnis von Komponente D) zu den Komponente A) bis C) und ggf. weiteren Vernetzern und Härtern wird dabei so bemessen, dass ein NCO/OH-Verhältnis der freien und gegebenenfalls blockierten NCO-Gruppen zu den isocyanatreaktiven Gruppen von 0,3 bis 2, bevorzugt 0,4 bis 1,5 besonders bevorzugt 0,5 bis 1,2 resultiert.

In den erfindungswesentlichen Beschichtungsmitteln können zusätzlich zu den erfindungswesentlichen Komponenten A) bis C) und D) auch in der Beschichtungstechnologie übliche Hilfsstoffe, wie anorganische oder organische Pigmente, weitere organische Lichtschutzmittel, Radikalfänger, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und weitere Katalysatoren mit verwendet werden.

Die erfindungsgemäßen Beschichtungsmittel kommen vorzugsweise in den Bereichen Autoerstlackierung, Autoreparaturlackierung, Großfahrzeuglackierung, Kunststofflackierung, allgemeine Industrielackierung, Bodenbeschichtung und/oder Holz-/Möbellackierung zur Anwendung.

Gegenstand der Erfindung sind daher auch Beschichtungen und beschichtete Substrate, die unter Einsatz der erfindungsgemäßen Polyolkombinationen aus A) und B) erhältlich sind.

**Beispiele:**

Desmophen® A 870: Hydroxylgruppenhaltiges Polyacrylat der Firma Bayer MaterialScience AG, Leverkusen, DE; ca. 70%ig in Butylacetat, Hydroxylgehalt nach DIN 53 240/2 ca. 2,95 %.

Desmophen® VP LS 2971: Elastifizierender, hydroxylgruppenhaltiger Polyester der Firma Bayer MaterialScience AG, Leverkusen, DE; ca. 80%ig in Butylacetat, Hydroxylgehalt nach DIN 53 240/2 ca. 3,8 %.

Desmodur® N 3600: Aliphatisches Polyisocyanurat der Firma Bayer MaterialScience AG, Leverkusen, DE; 100 Gew.%ig, mit einem NCO-Gehalt nach DIN EN ISO 11909 von 23 Gew.-%

Desmodur® N 3390 BA: Aliphatisches Polyisocyanurat der Firma Bayer MaterialScience AG, Leverkusen, DE; 90 Gew.-%ig in n-Butylacetat mit einem NCO-Gehalt nach DIN EN ISO 11909 von 19,6 Gew.-%

Die Bestimmung der Hydroxylzahl (OH-Zahl) erfolgte gemäß DIN 53240-2

Die Viskositätsbestimmung erfolgte mittels Rotationsviskosimeter "MCR 51" der Fa. Paar, Deutschland gemäß DIN EN ISO 3219.

Die Bestimmung der Säurezahl erfolgte gemäß DIN EN ISO 2114.

Die Farbzahlbestimmung (APHA) erfolgte gemäß DIN EN 1557.

**Beispiel 1: Oligocarbonatdiol** A1Herstellung eines aliphatischen Oligocarbonatdiols auf Basis 1,6-Hexandiol / 1,4-Butandiol mit einem zahlenmittleren Molekulargewicht von 2.000 g/mol

In einem 6 1 Druckreaktor mit Destillationsaufsatz, Rührer und Vorlage wurden 1.390 g 1,4-Butandiol, 608 g 1,6-Hexandiol mit 0,7 g Yttrium(III)acetylacetonat sowie 914 g Dimethylcarbonat bei 80 °C vorgelegt. Anschließend wurde unter Stickstoffatmosphäre das Reaktionsgemisch in 2 h auf 150 °C aufgeheizt und dort unter Rühren und Rückfluss 2 h gehalten wobei der Druck auf 3,9 bar (absolut) anstieg. Danach wurden das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 914 g Dimethylcarbonat bei 150 °C zu dem Reaktionsgemisch dosiert und dort unter Rühren und Rückfluss 2 h gehalten, wobei der Druck auf 3,9 bar (absolut) anstieg. Danach wurde erneut das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 782 g Dimethylcarbonat bei 150 °C zu dem Reaktionsgemisch dosiert und dort unter Rühren und Rückfluss 2 h gehalten, wobei der Druck auf 3,5 bar (absolut) anstieg. Danach wurde erneut das Spaltprodukt Methanol im Gemisch mit Dimethylcarbonat per Destillation entfernt, wobei der Druck innerhalb von 4 h auf Normaldruck gesenkt wurde. Im Anschluss daran wurde das Reaktionsgemisch innerhalb von 2 h auf 180 °C erhitzt und bei dieser Temperatur 2 h unter Rühren gehalten. Daran anschließend wurde die Temperatur auf 130 °C reduziert und ein Stickstoffstrom (5 1/h) durch das Reaktionsgemisch hindurchgeleitet, während der Druck auf 20 mbar abgesenkt wurde. Danach wurde die Temperatur binnen 4 h auf 180 °C erhöht und dort 6 h gehalten. Dabei erfolgte die weitere Entfernung von Methanol im Gemisch mit Dimethylcarbonat aus dem Reaktionsgemisch.

Nach Belüftung und Abkühlung des Reaktionsansatzes auf Raumtemperatur, wurde ein farbloses, wachsartiges Oligocarbonatdiol mit folgenden Kennzahlen erhalten:

$M_n$ = 1.968 g/mol; OH-Zahl = 57 mg KOH/g; Viskosität: 3.513 mPa·s bei 75 °C, Hazen-Farbzahl: 47 APHA.

**Beispiel 2: Oligocarbonatdiol** A2 Herstellung eines aliphatischen Oligocarbonatdiols auf Basis 3-Methyl-1,5-pentandiol mit einem zahlenmittleren Molekulargewicht von 650 g/mol

Vorgehen wie in Beispiel 1, wobei anstatt 1,6-Hexandiol 34.092 g 3-Methyl-1,5-pentandiol und 8,0 g Ytterbium (III)acetylacetonat in einem 60 1 Druckreaktor vorgelegt wurden und Dimethylcarbonat in drei Schritten zu je zweimal 10.223 g und einmal 7.147 g zugegeben wurde.

Man erhielt ein farbloses, flüssiges Oligocarbonatdiol mit folgenden Kennzahlen: $M_n$ = 675 g/mol; OH-Zahl = 166,0 mg KOH/g; Viskosität: 4.146 mPa·s bei 23 °C, Hazen-Farbzahl: 17 APHA.

**Beispiel 3: Oligocarbonatdiol A3**

Herstellung eines aliphatischen Oligocarbonatdiols auf Basis Polytetrahydrofuran 250 (Molgewicht 250 g/mol) mit einem zahlenmittleren Molekulargewicht von 1.000 g/mol

Vorgehen wie in Beispiel 1, wobei anstatt 1,6-Hexandiol 3.259 g Polytetrahydrofuran 250 und 0,7 g Yttrium(III) acetylacetonat in einem 6 1 Druckreaktor vorgelegt und Dimethylcarbonat in drei Schritten zu je zweimal 439 g und einmal 376 g zugegeben wurde.

Man erhielt ein farbloses, flüssiges Oligocarbonatdiol mit folgenden Kennzahlen: $M_n$ = 1.002 g/mol; OH-Zahl = 112 mg KOH/g; Viskosität: 1.360 mPa·s bei 23 °C, Hazen-Farbzahl: 13 APHA.

**Beispiel 4: Oligocarbonatdiol A4**

Herstellung eines aliphatischen Oligocarbonatdiols auf Basis Cyclohexandimethanol und 1,4-Butandiol mit einem zahlenmittleren Molekulargewicht von 500 g/mol

Vorgehen wie in Beispiel 1, wobei anstatt 1,6-Hexandiol 2.119 g Cyclohexan-1,4-dimethanol, 1.325 g 1,4-Butandiol und 0,8 g Yttrium(III)acetylacetonat in einem 6 1 Druckreaktor vorgelegt und Dimethylcarbonat in drei Schritten zu je zweimal 1.012 g und einmal 867 g zugegeben wurde.

Man erhielt ein farbloses, flüssiges Oligocarbonatdiol mit folgenden Kennzahlen: $M_n$ = 492 g/mol; OH-Zahl = 228 mg KOH/g; Viskosität: 87.700 mPa·s bei 23 °C, Hazen-Farbzahl: 35 APHA.

**Beispiel 5: Oligoesterpolyol B1**

Herstellung eines aliphatischen Oligoesters auf Basis von Trimethylolpropan

In einen Reaktor gemäß Beispiel 1 wurden 3.155 g Trimethylolpropan, 1.345 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 99,5 Gew.-%, Viskosität bei 23 °C: 4.100 mPa·s, Säurezahl: 0,5 mg KOH/g, Hydroxylzahl: 881 mg KOH/g, Hydroxylgehalt: 26,7 Gew.-%, Hazen-Farbzahl: 44 APHA.

**Beispiel 6: Oligoesterpolyol B2**

Herstellung eines aliphatischen Oligoesters auf Basis von Trimethylolpropan

In einen Reaktor gemäß Beispiel 1 wurden 2.747 g Trimethylolpropan, 1.753 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 99,5 Gew.-%, Viskosität bei 23 °C: 3.300 mPa·s, Säurezahl: 1,0 mg KOH/g, Hydroxylzahl: 766 mg KOH/g, Hydroxylgehalt: 23,2 Gew.%, Hazen-Farbzahl: 72 APHA.

**Beispiel 7: Oligoesterpolyol B3**

Herstellung eines aliphatischen Oligoesters auf Basis von Trimethylolpropan

In einen Reaktor gemäß Beispiel 1 wurden 1.977 g Trimethylolpropan, 2.523 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 99,6 Gew.-%, Viskosität bei 23 °C: 2.080 mPa·s, Säurezahl: 0,6 mg KOH/g, Hydroxylzahl: 542 mg KOH/g, Hydroxylgehalt: 16,4 Gew.-%, Hazen-Farbzahl: 48 APHA.

**Beispiel 8: Oligoesterpolyol B4**

Herstellung eines aliphatischen Oligoesters auf Basis von Trimethylolpropan

In einen Reaktor gemäß Beispiel 1 wurden 1.407 g Trimethylolpropan, 3.593 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 100,0 Gew.-%, Viskosität bei 23 °C: 1.730 mPa·s, Säurezahl: 0,5 mg KOH/g, Hydroxylzahl: 356 mg KOH/g, Hydroxylgehalt: 10,8 Gew.-%, Hazen-Farbzahl: 17 APHA.

**Beispiel 9: Oligoesterpolyol B5**

Herstellung eines aliphatischen Oligoesters auf Basis von Trimethylolpropan

In einen Reaktor gemäß Beispiel 1 wurden 737 g Trimethylolpropan, 3.763 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 99,8 Gew.-%, Viskosität bei 23 °C: 1.750 mPa·s, Säurezahl: 0,9 mg KOH/g, Hydroxylzahl: 202 mg KOH/g, Hydroxylgehalt: 6,1 Gew.%, Hazen-Farbzahl: 28 APHA.

**Beispiel 10: Oligoesterpolyol B6**

Herstellung eines aliphatischen Oligoesters auf Basis von Glycerin

In einen Reaktor gemäß Beispiel 1 wurden 2.010 g Glycerin, 2.490 g ε-Caprolacton und 2,25 g Dibutylzinndilaurat (DBTL) eingewogen. Der Kesselinhalt wurde auf 160 °C aufgeheizt, 6 Stunden bei 160 °C gerührt und anschließend auf 20 °C abgekühlt, wobei ein klares Harz mit folgenden Kenndaten erhalten wurde: Festgehalt: 100,0 Gew.%, Viskosität bei 23 °C: 980 mPa·s, Säurezahl: 1,2 mg KOH/g, Hydroxylzahl: 811 mg KOH/g, Hydroxylgehalt: 24,6 Gew.-%, Hazen-Farbzahl: 23 APHA.

**Beispiele 11 bis 18**

**Herstellung der erfindungsgemäßen Bindemittelkombinationen bestehend aus A) und B)**

Die Oligocarbonatdiole A) und die Oligoesterpolyole B) werden in einem 1 Liter Glaskolben unter Stickstoffatmosphäre 1 Stunde bei 60 °C gerührt. Dann werden die erhaltenen Polyolgemische auf Raumtemperatur abgekühlt, deren Kenndaten bestimmt und für die weiteren Anwendungsbeispiele bereitgehalten. Die Zusammensetzungen in Gew.-% Festharz der erfindungsgemäßen Polyolkomponenten AB4) und AB6 bis AB8) sind in Tabelle 1 und die entsprechenden Kenndaten sind in Tabelle 2 aufgeführt.

**Tabelle 1:** Zusammensetzungen der erfindungsgemäßen Polyolgemische AB4 und AB6 bis AB8 in Gew.%, bezogen auf Festharz.

| Polyolgemisch | AB4 | AB6 | AB7 | AB8 |
|---|---|---|---|---|
| Komponente a1 | - | - | - | 45,5 |
| Komponente a2 | 33,3 | 25,0 | - | - |
| Komponente a3 | - | - | - | - |
| Komponente a4 | - | - | 40,0 | - |
| Komponente b1 | 66,7 | - | 60,0 | - |
| Komponente b2 | - | 75,0 | - | - |
| Komponente b3 | - | - | - | - |
| Komponente b4 | - | - | - | 54,5 |
| Komponente b5 | - | - | - | - |
| Komponente b6 | - | - | - | - |

**Tabelle 2:** Kenndaten der erfindungsgemäßen Polyolgemische AB4 und AB6 bis AB8

| Polyolgemisch | AB4 | AB6 | AB7 | AB8 |
|---|---|---|---|---|
| Festgehalt [Gew.-%] | 99,5 | 99,7 | 99,2 | 99,6 |
| Viskosität bei 23 °C [mPa·s] | 4550 | 3690 | 10800 | 8140 |
| Säurezahl [mg KOH/g] | 0,2 | 0,4 | 0,2 | 0,1 |
| OH-Zahl [mg KOH/g] | 656 | 607 | 595 | 217 |
| OH-Gehalt Festharz [%] | 18,8 | 18,4 | 18,0 | 6,6 |

**Beispiele 19 bis 21:**

**Herstellung von hydroxyfunktionellen Polyacrylaten C) (nicht erfindungsgemäß)**

Diese Polyacrylatpolyole dienen als Kombinationspartner für die erfindungsgemäßen Polyolkombinationen AB), bestehend aus den Oligocarbonatpolyolen A) und den Oligopolyesterpolyolen B).

**Herstellvorschrift für die Copolymerisate C1 bis C3**

In einem 6-1-Edelstahldruckreaktor mit Rührer, Destillationseinrichtung, Vorlagebehälter für Monomermischung und Initiator inklusive Dosierpumpen sowie automatischer Temperaturregelung wurde Teil 1 vorgelegt und auf die gewünschte Polymerisationstemperatur aufgeheizt. Dann wurden durch separate Zuläufe gemeinsam beginnend Teil 2 (Monomermischung) in 3 Stunden und Teil 3 (Initiatorlösung) in 3,5 Stunden zudosiert, wobei die Polymerisationstemperatur konstant ($\pm$ 2 °C) gehalten wurde. Anschließend wurde 60 Minuten bei der Polymerisationstemperatur nachgerührt. Dann wurde auf Raumtemperatur abgekühlt und der Festgehalt bestimmt. Die Copolymerisate sollten einen Festgehalt von 70 $\pm$ 1 % haben. Bei einem Festgehalt von $\leq$ 68 % wurde mit 5 % der ursprünglichen Initiatormenge bei 150 °C 30 Minuten nachaktiviert. Bei einem Festgehalt zwischen 68 und 69 % wurde auf 70 $\pm$ 1 % andestilliert. Danach wurde das Copolymerisat filtriert (Supra T5500, Porengröße 25 - 72 $\mu$m, Seitz-Filter-Werke GmbH, Bad Kreuznach, DE). Die Zusammensetzungen der Teile 1 bis 3 und die Kenndaten der Produkte sind in der Tabelle 3 aufgeführt.

**Tabelle 3:**

| Copolymerisat | C1 | C2 | C3 |
|---|---|---|---|
| **Teil 1** | | | |
| Butylacetat | - | - | 25,00 |
| Solventnaphtha 100[1)] | 25,00 | 25,00 | - |

(fortgesetzt)

| | | | |
|---|---|---|---|
| **Teil 2** | | | |
| Styrol | 10,79 | 11,89 | 27,44 |
| Hydroxyethylmethacrylat | 21,81 | 21,81 | 23,00 |
| Butylacrylat | 33,51 | 33,51 | 17,04 |
| Polybutadien Nisso® B 1000[2)] | 0,95 | - | - |
| Polybutadien Lithene AL[3)] | - | 0,95 | - |
| Acrylsäure | 1,09 | - | 0,68 |
| **Teil 3** | | | |
| Di-tert.-butylperoxid | 2,84 | 2,84 | 2,84 |
| Butylacetat | - | - | 4,00 |
| Solventnaphtha 100[1)] | 4,00 | 4,00 | - |
| Polymerisationstemperatur, °C | 160 | 160 | 170 |
| | | | |
| **Kenndaten** | | | |
| Festgehalt [Gew.-%] | 70,5 | 69,4 | 70,1 |
| Viskosität bei 23 °C [mPa·s] | 3710 | 1140 | 3582 |
| Säurezahl, Lieferform [mg KOH/g] | 10,1 | 1,8 | 7,8 |
| OH-Zahl, Lieferform [mg KOH/g] | 91 | 93 | 97 |
| OH-Gehalt, Festharz [Gew.-%] | 3,9 | 4,1 | 4,2 |
| Hazen-Farbzahl, Lieferform [APHA] | 24 | 19 | 15 |

Alle Mengenangaben sind in Gew.-% zu verstehen.
[1)] Handelsprodukt der DHC Solvent Chemie GmbH, D-45478 Mülheim an der Ruhr
[2)] Handelsprodukt der Nippon Soda, Japan
[3)] Handelsprodukt der Synthomer GmbH, Frankfurt/Main

**Anwendungsbeispiele:**

**Beispiel 22:**

Zubereitung eines Stammlackes (Komponente 22ABC)

Zu 120,0 g einer Mischung aus 36 g Polyol AB3 und 84 g Polyacrylatpolyol C2 wurden 1,4 g Baysilone® OL 17 (10 %-ige Lösung in MPA; Borchers GmbH, Langenfeld), 2,8 g Tinuvin® 292 (50 %ige Lösung in MPA, Ciba Spezialitätenchemie Lampertheim GmbH, Lampertheim), 4,2 g Tinuvin® 382/4 (50 %ige Lösung in MPA, Ciba Spezialitätenchemie Lampertheim GmbH, Lampertheim), 1,4 g Modaflow® (1 %-ige Lösung in MPA; Brenntag AG, Mülheim/R), 34,8 g einer 1: 1 Mischung aus 1-Methoxypropylacetat-2 und Solventnaphtha 100 gegeben und innig verrührt.

Zubereitung der Härterlösung (Komponente 22D)

Zu 43,4 g Desmodur® N 3600 wurden 23,4 g einer 1: 1 Mischung aus 1-Methoxypropylacetat-2 und Solventnaphtha 100 gegeben und innig verrührt.

**Beispiele 23 - 25 und Vergleichsbeispiele V1 und V2:**

Gleiches Vorgehen wie in Beispiel 22. Es wurden jedoch die in Tabelle 4 und Tabelle 5 (Vergleichsbeispiele V1 und V2) aufgeführten Rohstoffe eingesetzt.

**Tabelle 4:**

| Stammlack | 23 ABC | 24 ABC | 25 ABC |
|---|---|---|---|
| Polyol AB (Einsatzmenge in g) | 60 g AB4 | 80 g AB5 | 55 g AB8 |

(fortgesetzt)

| Stammlack | 23 ABC | 24 ABC | 25 ABC |
|---|---|---|---|
| Polyacrylat C (Einsatzmenge in g) | 40 g C2 | 20 g C3 | 45 g C1 |
| Gesamteinwaage [g] | 100,0 | 100,0 | 100,0 |
| Baysilone® OL 17 (10% MPA) [g] | 1,28 | 1,41 | 1,29 |
| Tinuvin® 292 (50% MPA) [g] | 2,57 | 2,83 | 2,58 |
| Tinuvin® 382/4 (50% MPA) [g] | 3,85 | 4,24 | 3,87 |
| Modaflow® (1% MPA) [g] | 1,28 | 1,41 | 1,29 |
| 1-Methoxypropylacetat-2 / Solventnaphtha 100 (1:1) [g] | 42,31 | 56,47 | 42,81 |
| Härter | 23D | 24D | 25D |
| Desmodur® N 3600 [g] | 122,35 | - | - |
| Desmodur® N 3390 BA [g] | - | 101,77 | 57,65 |
| 1-Methoxypropylacetat-2 /Solventnaphtha 100 (1:1) [g] | 76,52 | 45,34 | 23,78 |

**Tabelle 5:**

| Vergleichsbeispiel | V1 | V2 |
|---|---|---|
| **Stammlack** | | |
| Desmophen® A 870 [g] | 64,6 | 86,9 |
| Desmophen® VP LS 2971 [g] | 18,9 | -- |
| Baysilone® OL 17 (10% Xylol) [g] | 0,9 | 0,9 |
| Tinuvin® 292 (10% Xylol) [g] | 9,1 | 9,1 |
| Tinuvin® 1130 (10% Xylol) [g] | 18,1 | 18,1 |
| Modaflow® (1% Xylol) [g] | 0,9 | 0,9 |
| 1-Methoxypropylacetat-2 / Solventnaphtha 100 (1:1) [g] | 11,9 | 8,7 |
| Butylglycolacetat [g] | -- | 3,6 |
| **Härter** | | |
| Desmodur® N 3390 BA [g] | 33,8 | 33,1 |
| 1-Methoxypropylacetat-2 / Solventnaphtha 100 (1:1) [g] | 11,9 | 8,6 |

<u>Vermischung des Stammlackes mit dem Härter und Applikation:</u>

Die oben aufgeführten Komponenten ABC (Stammlack) und D (Härter) wurden jeweils zusammengemischt und innig verrührt. Anschließend wurden die Mischungen jeweils mit einer Luftpistole auf mit schwarzem Basislack vorbeschichtete Coil Coat Bleche appliziert, 10 min bei Raumtemperatur abgelüftet und anschließend 30 min. bei 140°C im Umluftofen eingebrannt. Es wurden brillante, hochglänzende Beschichtungen mit einer Trockenfilmschichtdicke von ca. 40 $\mu$m erhalten. Eine Übersicht über die ermittelten lacktechnischen Eigenschaften der Beschichtungen ist in Tabelle 6 dargestellt.

**Tabelle 6: Lacktechnische Eigenschaften von Beschichtungen**

| Beispiel | 22 | 23 | 24 | 25 | Vergleich 1 | Vergleich 2 |
|---|---|---|---|---|---|---|
| Pendelhärte (s) auf Glas | 183 | 175 | 169 | 178 | 182 | 197 |
| FAM/Xylol, 10 min | 2/2 | 2/2 | 2/2 | 2/2 | 2/2 | 2/2 |
| Haze | 10 | 9 | 9 | 10 | 11 | 10 |
| Kratzfestigkeit | | | | | | |
| Glanz vorher (20°) | 88 | 86 | 89 | 88 | 91 | 92 |
| Glanz nach 10 Zyklen (20°) | 78 | 83 | 74 | 80 | 58 | 52 |
| Rel. Restglanz (%) | 89 | 96 | 83 | 91 | 63 | 56 |
| Glanz nach 2h 60 °C Reflow | 82 | 84 | 81 | 83 | 75 | 76 |

(fortgesetzt)

| Kratzfestigkeit Rel. Restglanz n. Reflow (%) | 93 | 98 | 91 | 94 | 82 | 82 |
|---|---|---|---|---|---|---|
| **Chemikalienbeständigkeit** | | | | | | |
| Baumharz | 36 | 38 | 38 | 38 | 36 | 38 |
| Pankreatin | 36 | 36 | 36 | 36 | 36 | 36 |
| VE-Wasser | 43 | 46 | 45 | 44 | 40 | 44 |
| NaOH ,1% | 42 | 46 | 44 | 42 | 42 | 42 |
| $H_2SO_4$,1% | 43 | 44 | 45 | 43 | 41 | 45 |

**Prüfmethoden:**

**Pendelhärte:**

Die Pendelhärte wurde gemäß der DIN EN ISO 1522 bestimmt.

**Beständigkeit gegen Benzin:**

Prüfung mit FAM-Prüfkraftstoff nach DIN 51 635, in Anlehnung an VDA 621-412 (Prüfung A 4.1.1 Y und 4.1.3 Y) und Xyol; Belastungsdauer 10 min:

**Kratzfestigkeit:**

Die Kratzfestigkeit wurde gemäß der DIN 55668 - Methode zur "Prüfung der Kratzfestigkeit von Beschichtungen mit einer Laborwaschanlage" bestimmt. Messung des Glanzgrades als Reflektometerwert gemäß DIN 67 530 vor und nach der Beanspruchung durch 10 Doppelhübe sowie nochmals nach 2 h Lagerung bei 60 °C (Reflow-Verhalten).

**Chemikalienbeständigkeit:**

Die Chemikalienbeständigkeit wurde gemäß DIN EN ISO 2812/5 (Entwurf) im Gradientenofen ermittelt.
Die erfindungsgemäßen Beschichtungen gemäß Beispiel 22 bis 25 weisen eine bessere Kratzbeständigkeit - sowohl vor als auch nach Reflow - auf als die Vergleichsbeispiele 1 und 2. Die Chemikalienbeständigkeit der erfindungsgemäßen Beschichtungen ist dabei in Summe ebenfalls besser als die der beiden Vergleichsbeispiele.

**Patentansprüche**

1. Bindemittelkombinationen, bestehend aus

    A) 20 bis 50 Gew.-% an aliphatischen Oligocarbonatpolyolen mit einem zahlenmittleren Molekulargewicht $M_n$ von 200 bis 2.000 g/mol basierend auf 1,4-Butandiol, 1-6-Hexandiol, 3-Methyl-1,5-Pentandiol, Cyclohexan-1,4-dimethanol, Trimethylolpropan, Glycerin oder deren Mischungen,
    B) 80 bis 50 Gew.% aliphatische Oligoesterpolyole mit einem zahlenmittleren Molekulargewicht $M_n$ von 200 bis 2.000 g/mol basierend auf ε-Caprotacton und 1,4-Butandiol, 1,6-Hexandiol, 3-Methyl-1,5-Pentandiol, Cyclohexan-1,4-dimethanol, Trimethylolpropan, Glycerin, Pentaerythrit oder Mischungen dieser Alkohole

    wobei sich die Mengen von A) und B) zu 100 Gew.% addieren

2. Beschichtungsmittel beinhaltend Bindemittelkombinationen gemäß Anspruch 1, **dadurch gekennzeichnet, dass** sie zusätzlich eine Vernetzerkomponente D) enthalten.

3. Beschichtungsmittel gemäß Anspruch 2, **dadurch gekennzeichnet, dass** sie zusätzlich eine Polyacrylatpolyolkomponente C) enthalten.

4. Beschichtungsmittel gemäß Ansprüchen 2 und 3, **dadurch gekennzeichnet, dass** als Vernetzer D) Aminoplastharze eingesetzt werden.

5. Beschichtungsmittel gemäß Ansprüchen 2 bis 3, **dadurch gekennzeichnet, dass** als Vernetzer D) Polyisocyanate, die gegebenenfalls blockiert sind, oder Polyisocyanatgemische mit Isocyanuratstruktur auf Basis von HDI, IPDI und/ oder 4,4'-Diisocyanatodicyclohexylmethan eingesetzt werden.

6. Beschichtungsmittel gemäß Anspruch 5, **dadurch gekennzeichnet, dass** das NCO/OH-Verhältnis der freien und gegebenenfalls blockierten NCO-Gruppen zu den isocyanatreaktiven Gruppen 0,5 bis 1,2 ist.

7. Beschichtungen, erhältlich aus den Beschichtungsmitteln gemäß einem der Ansprüche 2 bis 6.

8. Substrate, beschichtet mit Beschichtungen gemäß Anspruch 7.

**Claims**

1. Binder combinations consisting of

   A) 20 to 50 wt.% aliphatic oligocarbonate polyols with a number-average molecular weight $M_n$ of 200 to 2000 g/mol based on 1,4-butanediol, 1,6-hexanediol, 3-methyl-1,5-pentanediol, 1,4-cyclohexanedimethanol, trimethylolpropane, glycerol or mixtures thereof,
   B) 80 to 50 wt.% aliphatic oligoester polyols with a number-average molecular weight $M_n$ of 200 to 2000 g/mol based on $\varepsilon$-caprolactone and 1,4-butanediol, 1,6-hexanediol, 3-methyl-1,5-pentanediol, 1,4-cyclohexanedimethanol, trimethylolpropane, glycerol, pentaerythritol or mixtures of these alcohols

   wherein the quantities of A) and B) add up to 100 wt.%.

2. Coating compositions comprising binder combinations according to claim 1, **characterised in that** they additionally contain a crosslinking agent component D) .

3. Coating compositions according to claim 2, **characterised in that** they additionally contain a polyacrylate polyol component C).

4. Coating compositions according to claims 2 and 3, **characterised in that** as crosslinking agent D), amino resins are used.

5. Coating compositions according to claims 2 to 3, **characterised in that** as crosslinking agent D), optionally blocked polyisocyanates, or polyisocyanate mixtures with an isocyanurate structure based on HDI, IPDI and/or 4,4'-diisocyanatodicyclohexylmethane, are used.

6. Coating compositions according to claim 5, **characterised in that** the NCO/OH ratio of the free and optionally blocked NCO groups to the isocyanate-reactive groups is 0.5 to 1.2.

7. Coatings obtainable from the coating compositions according to one of claims 2 to 6.

8. Substrates coated with coatings according to claim 7.

**Revendications**

1. Associations de liants, constituées de

   A) 20 à 50 % en poids d'oligocarbonatepolyols aliphatiques ayant une masse moléculaire moyenne en nombre $M_n$ de 200 à 2 000 g/mole, à base de 1,4-butanediol, 1,6-hexanediol, 3-méthyl-1,5-pentandediol, cyclohexane-1,4-diméthanol, triméthylolpropane, glycérol ou de mélanges de ceux-ci ;
   B) 80 à 50 % en poids d'oligoesterpolyols aliphatiques ayant une masse moléculaire moyenne en nombre $M_n$ de 200 à 2 000 g/mole, à base d'$\varepsilon$-caprolactone et de 1,4-butanediol, 1,6-hexanediol, 3-méthyl-1,5-pentandediol, cyclohexane-1,4-diméthanol, triméthylolpropane, glycérol, pentaérythritol ou de mélanges de ces alcools

**EP 1 923 414 B1**

La somme des quantités de A) et B) étant égale à 100 % en poids.

2. Compositions de revêtement comportant des associations de liants selon la revendication 1, **caractérisée en ce qu'**elles contiennent en outre un composant agent de réticulation D).

3. Compositions de revêtement selon la revendication 2, **caractérisées en ce qu'**elles contiennent en outre un composant polyacrylatepolyol C).

4. Compositions de revêtement selon les revendications 2 et 3, **caractérisées en ce qu'**on utilise comme agent de réticulation D) des résines aminoplaste.

5. Compositions de revêtement selon les revendications 2 et 3, **caractérisées en ce qu'**on utilise comme agent de réticulation D) des polyisocyanates, qui sont éventuellement bloqués, ou des mélanges de polyisocyanates à structure isocyanurate à base de HDI, IPDI et/ou 4,4'-diisocyanatodicyclohexylméthane.

6. Compositions de revêtement selon la revendication 5, **caractérisées en ce que** le rapport NCO/OH des groupes NCO libres et des groupes NCO éventuellement bloqués aux groupes réactifs avec des isocyanates vaut de 0,5 à 1,2.

7. Revêtements, pouvant être obtenus à partir des compositions de revêtement selon l'une quelconque des revendications 2 à 6.

8. Subjectiles, revêtus avec des revêtements selon la revendication 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19824118 A
- WO 9620968 A
- EP 0896991 A
- EP 1101780 A
- EP 0819710 A
- EP 0778298 A
- EP 1731582 A
- EP 1873177 A
- EP 1550695 A
- EP 1404740 B1
- EP 1477508 A1
- DE 1670666 A
- DE 1954093 A
- DE 2414413 A
- DE 2452532 A
- DE 2641380 A
- DE 3700209 A
- DE 3900053 A
- DE 3928503 A
- EP 336205 A
- EP 339396 A
- EP 798299 A

**In der Beschreibung aufgeführte Nicht-Patentliteratur**

- Lösemittel- und Chemikalienbeständigkeit, insbesondere die Säurebeständigkeit. Carl Hanser Verlag, 2000, vol. 54, 60-64
- *J. Prakt. Chem.,* 1994, vol. 336, 185-200
- **HOUBEN WEYL.** *Methoden der organischen Chemie XIV/2,* 61-70